(19) Europäisches Patentamt
European Patent Office
Office européen des brevets

(11) **EP 4 510 423 A1**

(12) **EUROPEAN PATENT APPLICATION**
published in accordance with Art. 153(4) EPC

(43) Date of publication:
**19.02.2025 Bulletin 2025/08**

(21) Application number: 23788016.6

(22) Date of filing: **15.02.2023**

(51) International Patent Classification (IPC):
*H02J 50/10* (2016.01)          *H02J 50/12* (2016.01)
*H02J 50/60* (2016.01)          *H02J 50/80* (2016.01)
*H02J 50/90* (2016.01)

(52) Cooperative Patent Classification (CPC):
**H02J 50/10; H02J 50/12; H02J 50/60; H02J 50/80; H02J 50/90**

(86) International application number:
**PCT/JP2023/005324**

(87) International publication number:
**WO 2023/199593 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022   JP 2022065780**
              **17.05.2022   JP 2022081019**

(71) Applicant: **CANON KABUSHIKI KAISHA**
**Tokyo 146-8501 (JP)**

(72) Inventor: **SHICHINO, Takahiro**
**Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **POWER-RECEIVING DEVICE AND METHOD FOR CONTROLLING SAME, POWER-FEEDING DEVICE AND METHOD FOR CONTROLLING SAME, PROGRAM, AND STORAGE MEDIUM**

(57)     Provided is a technique for enabling execution of detection of an object different from a power receiving apparatus with high accuracy.

A wireless power transmission system includes a power transmitting apparatus 100 and a power receiving apparatus 101. The power transmitting apparatus 100 transmits power with a power transmitting coil, and the power receiving apparatus 101 receives power with a power receiving coil. The power receiving apparatus 101 associates information such as a positional relationship between the power transmitting coil and the power receiving coil when the power receiving apparatus 101 is placed on the prescribed power transmitting coil, the presence or absence or a position of an object different from the power transmitting apparatus 100 and the power receiving apparatus 101, an operating frequency, and a received power value with a prescribed physical quantity. The prescribed physical quantity is a Q factor pertaining to the power transmitting coil, a resonant frequency, a coupling coefficient between the power transmitting coil and the power receiving coil, power consumption in the object, and the like. The power receiving apparatus 101 transmits the associated information to the power transmitting apparatus 100. The power transmitting apparatus 100 executes detection processing of the object according to information received from the power receiving apparatus 101.

(Cont. next page)

# FIG. 10

```
                    ┌──────────────┐
                    │    START     │
                    └──────┬───────┘
                           │
                    ┌──────▼───────────────┐
                    │   TRANSMIT FOD (Q1)   │────S700
                    └──────┬───────────────┘
                           │              ┌─S701
                    ◇──────▼──────────────────◇  NO
                    │   IS ACK RECEIVED?       │──────────┐
                    ◇──────┬──────────────────◇           │
                           │ YES                          │
                    ┌──────▼───────────────┐              │
                    │  TRANSMIT GRQ (CAP)   │────S702      │
                    └──────┬───────────────┘              │
                           │              ┌─S703          │
                    ◇──────▼──────────────────◇  NO       │
                    │   IS CAP RECEIVED?       │──────────┤
                    ◇──────┬──────────────────◇           │
                           │ YES                          │
                           │              ┌─S704          │
                    ◇──────▼──────────────────◇  NO       │
                    │    improved FOD?         │──────────┤
                    ◇──────┬──────────────────◇           │
                           │ YES                          │
                    ┌──────▼───────────────┐              │
                    │ TRANSMIT DATA IN WHICH │──S705       │
                    │ PRESCRIBED PHYSICAL    │             │
                    │ QUANTITY, POSITION     │             │
                    │ INFORMATION OF POWER   │             │
                    │ RECEIVING APPARATUS,   │             │
                    │ AND RECEIVED POWER     │             │
                    │ VALUE ARE ASSOCIATED   │             │
                    └──────┬───────────────┘              │
                           │              ┌─S706          │
                    ◇──────▼──────────────────◇  NO       │
                    │   IS ACK RECEIVED?       │──────────┤
                    ◇──────┬──────────────────◇           │
                           │ YES                          │
                    ┌──────▼───────────────┐              │
                    │   TRANSMIT GRQ (GP)   │────S707      │
                    └──────┬───────────────┘              │
                           │              ┌─S708          │
                    ◇──────▼──────────────────◇  NO       │
                    │   IS ACK RECEIVED?       │──────────┤
                    ◇──────┬──────────────────◇           │
                           │ YES                          │
                    ┌──────▼───────────────┐              │
                    │   TRANSMIT GRQ (EN)   │────S709      │
                    └──────┬───────────────┘              │
                           │              ┌─S710          │
                    ◇──────▼──────────────────◇  NO       │
                    │   IS ACK RECEIVED?       │──────────┤
                    ◇──────┬──────────────────◇           │
                           │ YES                          │
                    ┌──────▼───────────────┐              │
                    │         END          │◄─────────────┘
                    └──────────────────────┘
```

**Description**

[Technical Field]

The present disclosure relates to a technique of wireless power transmission.

[Background Art]

A standard (hereinafter, referred to as a WPC standard) stipulated as a wireless charging standard by the Wireless Power Consortium, which is a standard-setting organization, is widely known. In a wireless power transmission system using a technique of wireless power transmission, it is necessary to detect the presence or absence of an object between a power transmitting apparatus and a power receiving apparatus. The object (hereinafter, referred to as a foreign object) is an object that is not either a power transmitting apparatus or a power receiving apparatus, and refers to an object that is likely to generate heat upon exposure to a power signal. Power transmission/reception control is performed based on a detection result for an object that may be present within a range in which the power transmitting apparatus can feed power.

Patent Literature 1 discloses a technique for performing foreign object detection and restricting power transmission/reception if a foreign object is present near a power transmitting/receiving apparatus conforming to the WPC standard. Patent Literature 2 discloses a technique for short-circuiting a coil of a wireless power transmission system to perform foreign object detection. Patent Literature 3 discloses a technique for performing foreign object detection based on a change of a quality factor (Q factor) pertaining to a power transmitting coil measured by applying a high-frequency signal to the power transmitting coil of a wireless power transmission system in a given period.

[Citation List]

[Patent Literature]

[Patent Literature 1] Japanese Patent Laid-Open No. 2017-070074
[Patent Literature 2] Japanese Patent Laid-Open No. 2017-034972
[Patent Literature 3] Japanese Patent Laid-Open No. 2017-022999

[Summary of Invention]

[Technical Problem]

In the related art, if the accuracy of the state detection or the foreign object detection in the wireless power transmission system conforming to the WPC standard is reduced, there is a possibility of causing trouble in the control of the wireless power transmission.

An object of the present disclosure is to provide a technique for enabling execution of detection of an object different from a power receiving apparatus with high accuracy.

[Solution to Problem]

A power receiving apparatus of an embodiment of the present disclosure that receives power from a power transmitting apparatus through wireless power transmission includes communication means for communicating with the power transmitting apparatus, and control means for performing association with a physical quantity for use in detection of a state of the power receiving apparatus with respect to the power transmitting apparatus or detection of an object different from the power transmitting apparatus and the power receiving apparatus and perform control of transmitting the associated information to the power transmitting apparatus by the communication means.

[Advantageous Effects of the Invention]

According to the present disclosure, it is possible to provide a technique for enabling execution of detection of an object different from the power receiving apparatus with high accuracy.

[Brief Description of Drawings]

FIG. 1 is a diagram illustrating a system configuration of an embodiment and a position on a power transmitting coil.
FIG. 2 is a diagram illustrating a configuration example of a power receiving apparatus.
FIG. 3 is a diagram illustrating a configuration example of a power transmitting apparatus.
FIG. 4 is a configuration illustrating a functional configuration example of a control unit of the power transmitting apparatus.
FIG. 5 is a diagram illustrating a functional configuration example of a control unit of the power receiving apparatus.
FIG. 6 is a conceptual diagram illustrating foreign object detection by a Power Loss method.
FIG. 7 is a conceptual diagram illustrating a measurement method of a Q factor in a time domain.
FIG. 8 is a sequence diagram illustrating the operation of the power transmitting apparatus and the power receiving apparatus.
FIG. 9 is an explanatory view of an FOD Status packet that is transmitted from the power receiving apparatus.
FIG. 10 is a flowchart illustrating the operation of the power receiving apparatus.
FIG. 11 is an explanatory view of a Configuration packet that is transmitted from the power receiving apparatus.
FIG. 12 is a flowchart illustrating the operation of the power transmitting apparatus.
FIG. 13 is a diagram illustrating an association example of various kinds of information for use in detection.

[Description of Embodiments]

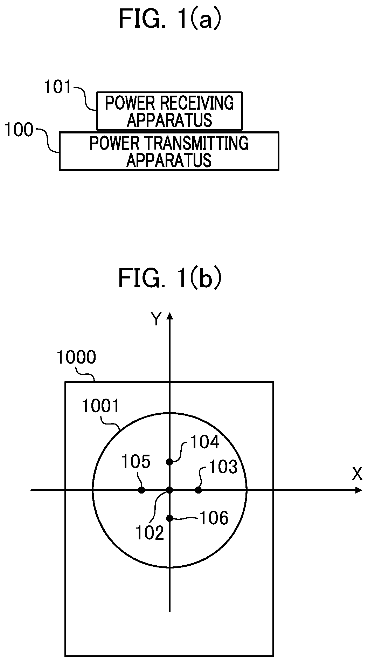

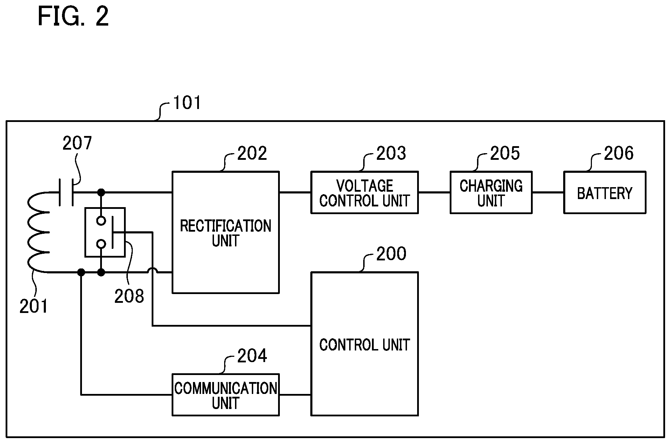

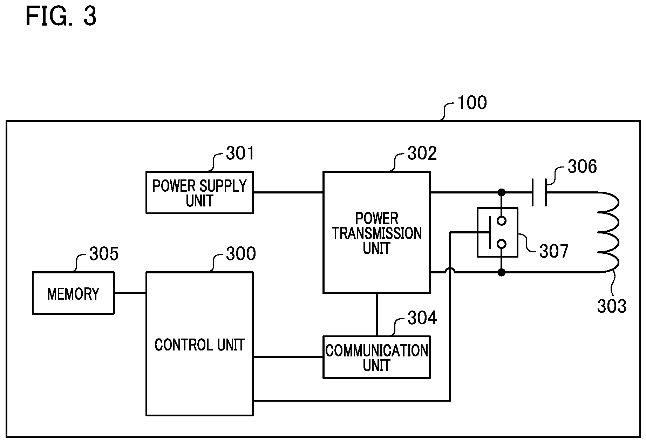

Hereinafter, an embodiment of the present disclosure will be described in detail with reference to the accompanying drawings. In the embodiment, wireless power transmission conforming to the WPC standard will be described as an example of a wireless charging system to which a wireless power transmission system is applied.
A configuration of a system according to the embodiment will be described with reference to FIG. 1. FIG. 1(A) is a diagram illustrating a configuration example of a wireless power transmission system. The wireless power transmission system includes a power transmitting apparatus 100 and a power receiving apparatus 101. The power transmitting apparatus 100 is an electronic apparatus that transmits power to, for example, the power receiving apparatus 101 placed on the power transmitting apparatus 100 via a power transmitting antenna in a wireless manner. The power receiving apparatus 101 is, for example, an electronic apparatus that receives power from the power transmitting apparatus 100 and charges an internal battery. In regard to the power transmitting apparatus 100 and the power receiving apparatus 101, there are an embodiment in which these apparatuses are configured as single apparatuses and an embodiment in which these apparatuses are incorporated in other apparatuses. The other apparatuses are imaging apparatuses, smartphones, tablet PCs, laptop PCs, automobiles, robots, medical equipment, printers, and the like, and can perform power supply to various apparatuses.
FIG. 1(B) is a schematic view illustrating a power transmitting coil and a position on the coil. A power transmitting apparatus (test power transmitter, hereinafter, referred to as TPT) 1000 for use in a compliance test of a power receiving apparatus conforming to the WPC standard and a power transmitting coil 1001 thereof are illustrated. In a planar coordinate system including an X axis and a Y axis, a point 102 indicates the center of the power transmitting coil 1001. A point 103 is a point distant from the point 102 by a prescribed distance in a +X direction of the drawing. A point 104 is a point distant from the point 102 by a prescribed distance in a +Y direction of the drawing. A point 105 is a point distant from the point 102 by a prescribed distance in a -X direction of the drawing. A point 106 is a point distant from the point 102 by a prescribed distance in a -Y direction of the drawing. The prescribed distance is set to, for example, 5 millimeters, but may be a different distance value.
A configuration of the power receiving apparatus 101 will be described with reference to FIG. 2. FIG. 2 is a diagram illustrating a configuration example of the power receiving apparatus 101. The power receiving apparatus 101 includes a control unit 200, a power receiving coil 201, a rectification unit 202, a voltage control unit 203, a communication unit 204, a charging unit 205, a battery 206, a resonance capacitor 207, and a switch unit 208.
The control unit 200 controls the entire power receiving apparatus 101. The control unit 200 includes, for example, one or more processors such as a central processing unit (CPU) or a micro processing unit (MPU). The control unit 200 may include one or more storage devices such as a random access memory (RAM) or a read only memory (ROM). The control unit 200 executes each kind of processing described below by causing the processor to execute a program stored in the storage device.
The power receiving coil 201 receives power from a power transmitting coil (FIG. 3: 303) of the power transmitting apparatus 100. The resonance capacitor 207 is connected to the power receiving coil 201. The rectification unit 202 converts an alternating-current voltage and an alternating current received via the power receiving coil 201 into a direct-current voltage and a direct current.

The voltage control unit 203 converts a level of the direct-current voltage input from the rectification unit 202 into a level of a direct-current voltage suitable for the operation of the control unit 200, the charging unit 205, and the like. The voltage control unit 203 supplies the voltage of the converted level to the control unit 200, the charging unit 205, and the like. The charging unit 205 charges the battery 206 based on the voltage supplied from the voltage control unit 203.

The communication unit 204 is connected to the control unit 200 and the power receiving coil 201. The communication unit 204 performs control communication of wireless charging based on the WPC standard with the power transmitting apparatus 100. The control communication is performed by load modulation of the alternating-current voltage and the alternating current received by the power receiving coil 201.

The power receiving coil 201 is connected to the resonance capacitor 207 and is configured to resonate at a specific frequency F2. The switch unit 208 has a function of short-circuiting the power receiving coil 201 and the resonance capacitor 207 and is controlled by a control signal from the control unit 200. If the switch unit 208 is turned on, the power receiving coil 201 and the resonance capacitor 207 form a series resonance circuit. In this case, a current flows in a closed circuit by the power receiving coil 201, the resonance capacitor 207, and the switch unit 208, and no current flows in the rectification unit 202 or the voltage control unit 203. On the other hand, if the switch unit 208 is turned off, a current flows in the rectification unit 202 and the voltage control unit 203 via the power receiving coil 201 and the resonance capacitor 207.

A configuration of the power transmitting apparatus 100 will be described with reference to FIG. 3. FIG. 3 is a diagram illustrating a configuration example of the power transmitting apparatus 100. The power transmitting apparatus 100 includes a control unit 300, a power supply unit 301, a power transmission unit 302, a power transmitting coil 303, a communication unit 304, a memory 305, a resonance capacitor 306, and a switch unit 307.

The control unit 300 controls the entire power transmitting apparatus 100. The control unit 300 includes one or more processors such as a CPU or an MPU. The control unit 300 executes each kind of processing described below by causing the processor to execute a program stored in the memory 305 or a storage device incorporated in the control unit 300.

The power supply unit 301 performs power supply to each unit of the power transmitting apparatus 100. The power supply unit 301 includes a connection circuit unit to a commercial power supply and a battery. For example, the battery is charged with power supplied from the commercial power supply.

The power transmission unit 302 converts direct-current power or alternating-current power input from the power supply unit 301 into alternating-current power in a frequency band for use in wireless power transmission. The power transmission unit 302 inputs the converted alternating-current power to the power transmitting coil 303 and generates electromagnetic waves to be received by the power receiving apparatus 101 from the power transmitting coil 303. For example, the power transmission unit 302 converts a direct-current voltage supplied from the power supply unit 301 into an alternating-current voltage by a switching circuit of a half-bridge configuration or a full-bridge configuration. The switching circuit of a bridge configuration is configured using a plurality of field effect transistors (FETs), and the power transmission unit 302 includes a gate driver that performs ON/OFF control of the plurality of FETs. The power transmission unit 302 controls the intensity or frequency of electromagnetic waves to be output, by adjusting one or both of a voltage (power transmission voltage) and a current (power transmission current) input to the power transmitting coil 303 or adjusting the frequency thereof. For example, the power transmission unit 302 controls the intensity level of the electromagnetic waves by adjusting the magnitude of the power transmission voltage or the power transmission current. It is assumed that the power transmission unit 302 has a power supply capability of outputting at least 15 watts (W) to the charging unit 205 of the power receiving apparatus 101 compatible with the WPC standard. The power transmission unit 302 performs output control of alternating-current power based on an instruction of the control unit 300 such that the output of the electromagnetic waves by the power transmitting coil 303 starts or stops.

The communication unit 304 is connected to the control unit 300 and the power transmission unit 302 and performs communication for power transmission control based on the WPC standard with the power receiving apparatus 101 via the power transmitting coil 303. The communication unit 304 modulates an alternating-current voltage and an alternating current output from the power transmission unit 302 using frequency shift keying (FSK) and transmits information to the power receiving apparatus 101. The communication unit 304 demodulates the alternating-current voltage and the alternating current subjected to load modulation by the communication unit 204 of the power receiving apparatus 101 to acquire information transmitted from the power receiving apparatus 101.

In the present embodiment, the communication of the communication unit 304 with the communication unit 204 of the power receiving apparatus 101 is performed by superimposing a signal of information to be transmitted to the power receiving apparatus 101 on the electromagnetic waves output from the power transmission unit 302. The power receiving apparatus 101 acquires information transmitted from the power receiving apparatus 101 by detecting the signal superimposed on the electromagnetic waves. The present disclosure is not limited to this example, and the communication unit 304 can communicate with the power receiving apparatus 101 according to a standard different from the WPC standard using a coil (or an antenna) different from the power transmitting coil 303. Examples of the communication standard include Bluetooth (Registered Trademark) Low Energy (BLE) and near field communication (NFC). The communication unit 304 may communicate with the power receiving apparatus 101 selectively using a plurality of communication functions according to the WPC standard and standards other than the WPC standard.

The memory 305 is connected to the control unit 300 and stores a control program that is executed by the processor of the control unit 300 and information regarding the states and the like of the power transmitting apparatus 100 and the power receiving apparatus 101. For example, information regarding the state of the power transmitting apparatus 100 is acquired by the control unit 300. Information regarding the state of the power receiving apparatus 101 is acquired by the control unit 200 and is transmitted from the communication unit 204 to the power transmitting apparatus 100. The power transmitting apparatus 100 acquires information regarding the state of the power receiving apparatus 101 via the communication unit 304. The control unit 300 and the control unit 200 can perform communication with each other to acquire information and can execute processing of state detection or determination.

The power transmitting coil 303 is connected to the resonance capacitor 306 and is configured to resonate at a specific frequency F1. The switch unit 307 has a function of short-circuiting the power transmitting coil 303 and the resonance capacitor 306 and is controlled by a control signal from the control unit 300. If the switch unit 307 is turned on, the power transmitting coil 303 and the resonance capacitor 306 form a series resonance circuit. In this case, a current flows in a closed circuit of the power transmitting coil 303, the resonance capacitor 306, and the switch unit 307. On the other hand, if the switch unit 208 is turned off, power is supplied to the power transmitting coil 303 and the resonance capacitor 306 from the power transmission unit 302.

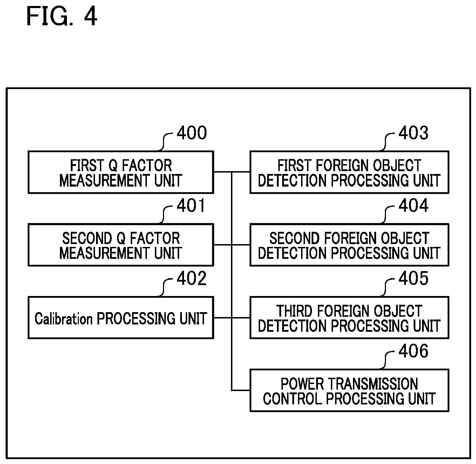

FIG. 4 is a diagram illustrating functional block elements that are implemented by the control unit 300 of the power transmitting apparatus 100. As the functional block elements of the control unit 300, a first Q factor measurement unit 400, a second Q factor measurement unit 401, a calibration processing unit 402, a first foreign object detection processing unit 403, a second foreign object detection processing unit 404, a third foreign object detection processing unit 405, and a power transmission control processing unit 406.

The first Q factor measurement unit 400 and the second Q factor measurement unit 401 perform measurement of physical quantities for use in state detection or the like of the wireless power transmission system. The first Q factor measurement unit 400 performs measurement (hereinafter, referred to as first Q factor measurement) of a Q factor in a frequency domain. The Q factor is denoted as a first Q factor. The second Q factor measurement unit 401 performs measurement of a Q factor by a method different from the first Q factor measurement unit 400. Specifically, the second Q factor measurement unit 401 performs measurement (hereinafter, referred to as second Q factor measurement) of a Q factor in a time domain. The Q factor is denoted as a second Q factor. Details of the first Q factor measurement and the second Q factor measurement will be described below.

The calibration processing unit 402 executes acquisition processing of a Calibration Data Point and creation processing of a Calibration curve. Details of the processing will be described below.

Each of the first foreign object detection processing unit 403, the second foreign object detection processing unit 404, and the third foreign object detection processing unit 405 performs foreign object detection based on an acquired measurement result. A foreign object is an object that is not either the power transmitting apparatus or the power receiving apparatus, and is an object that is likely to generate heat upon exposure to a power signal. Specifically, metal or the like corresponds to the foreign object. If a foreign object is present near the power transmitting apparatus 100, electromagnetic waves for power transmission influences the foreign object, and an increase in temperature, destruction, or the like of the foreign object is likely to occur. Note that, from among the power receiving apparatus, products or the power transmitting apparatus in which the power receiving apparatus is incorporated, or objects of indispensable portions in products in which the power transmitting apparatus is incorporated, objects likely to generate heat unintentionally upon exposure to wireless power transmitted from the power transmitting antenna do not correspond to a foreign object.

The first foreign object detection processing unit 403 acquires the first Q factor to execute first foreign object detection processing. The second foreign object detection processing unit 404 executes second foreign object detection processing based on a Power Loss method described below. The third foreign object detection processing unit 405 executes third foreign object detection processing based on the second Q factor.

The power transmission control processing unit 406 performs control of transmitted power by the power transmission unit 302. For example, control regarding power transmission start, power transmission stop, and an increase/decrease in transmitted power of the power transmission unit 302 is performed.

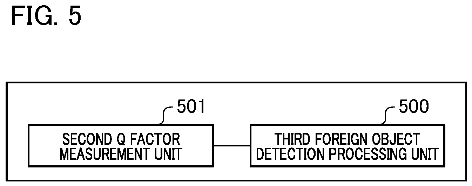

FIG. 5 is a diagram illustrating a configuration example of functional block elements that are implemented by the control unit 200 of the power receiving apparatus 101. As the functional block elements of the control unit 200, a second Q factor measurement unit 501 and a third foreign object detection processing unit 500 are illustrated. The second Q factor measurement unit 501 performs second Q factor measurement that is measurement of a Q factor in a time domain. The third foreign object detection processing unit 500 acquires the second Q factor measured by the second Q factor measurement unit 501 to execute third foreign object detection processing.

The respective processing units illustrated in FIGS. 4 and 5 are configured as independent programs and may operate in parallel while synchronizing the programs by event processing or the like.

Subsequently, an example of a foreign object detection method in the WPC standard will be described. Here, a foreign object detection method (hereinafter, referred to as a first detection method) based on the first Q factor and a foreign object detection method (hereinafter, referred to as a second detection method) based on a Power Loss method will be described.

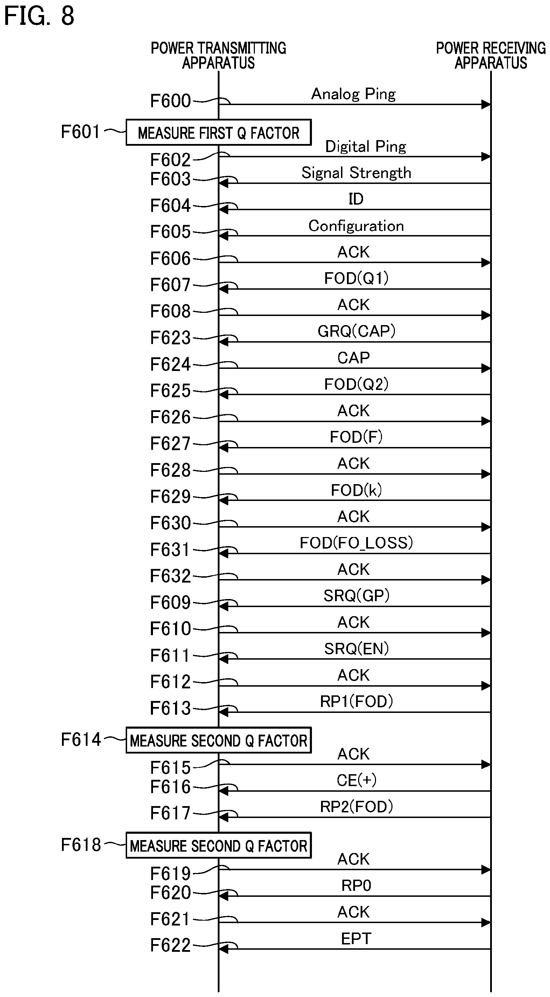

In the first detection method, first, the power transmitting apparatus 100 performs measurement (first Q factor measurement) of a Q factor, which changes due to an influence of a foreign object, in a frequency domain. The first Q factor measurement is executed in a period during which the power transmitting apparatus 100 transmits a Digital Ping after transmitting an Analog Ping (see F601 of FIG. 8). For example, to measure the first Q factor, the power transmission unit 302 sweeps a frequency of wireless power output from the power transmitting coil 303. The first Q factor measurement unit 400 measures a voltage value in a terminal portion of the resonance capacitor 306 connected in series (or in parallel) with the power transmitting coil. The first Q factor measurement unit 400 searches for a resonant frequency at which the measured voltage value exhibits a peak and calculates the first Q factor from a frequency indicating a voltage value lower than the peak voltage value measured at the resonant frequency by 3 dB and the resonant frequency.

There is another method for the measurement method of the first Q factor. For example, the power transmission unit 302 sweeps a frequency of wireless power output from the power transmitting coil 303. The first Q factor measurement unit 400 measures a voltage value in a terminal portion of the resonance capacitor 306 connected in series with the power transmitting coil 303 and searches for a resonant frequency at which the voltage value exhibits a peak. The first Q factor measurement unit 400 measures voltage values at both terminals of the resonance capacitor 306 at the found resonant frequency and calculates the first Q factor from a ratio of the voltage values at both terminals.

After the calculation of the first Q factor, the first foreign object detection processing unit 403 acquires a Q factor to be a determination criterion of foreign object detection from the power receiving apparatus 101 via the communication unit 304. For example, in a case where the power receiving apparatus is placed on a certain power transmitting coil defined by the WPC standard, the first foreign object detection processing unit 403 receives a Q factor (first characteristic value) pertaining to the power transmitting coil from the power receiving apparatus 101. The Q factor is stored in a foreign object detection (FOD) Status packet that is transmitted from the power receiving apparatus 101. The power transmitting apparatus 100 acquires the Q factor by receiving the FOD Status packet from the power receiving apparatus 101. Details of the FOD Status packet will be described below.

The first foreign object detection processing unit 403 estimates a Q factor of the power transmitting coil 303 in a case where the power receiving apparatus 101 is placed on the power transmitting apparatus 100, from the acquired Q factor. Hereinafter, the estimated Q factor is referred to as a first reference Q factor. The Q factor that is stored in the FOD Status packet is stored in advance in, for example, a non-volatile memory (not illustrated) of the power receiving apparatus 101. The power receiving apparatus 101 can notify the power transmitting apparatus 100 of the Q factor stored preliminarily. The Q factor corresponds to Q1 described below. The first foreign object detection processing unit 403 compares the first reference Q factor (first reference) with a measurement result of the first Q factor and determines the presence or absence or the possibility of presence or absence of a foreign object based on a comparison result. For example, the first foreign object detection processing unit 403 sets a Q factor lower than the first reference Q factor by a prescribed ratio as a threshold. If the predetermined ratio is denoted as a%, the threshold corresponds to a product of the first reference Q factor and a/100. If the measurement result of the first Q factor is lower than the set threshold, the first foreign object detection processing unit 403 determines that the possibility of reduction of the Q factor due to a foreign object is high. If the measurement result of the first Q factor is equal to or higher than the threshold, the first foreign object detection processing unit 403 determines that the possibility of absence of a foreign object is high.

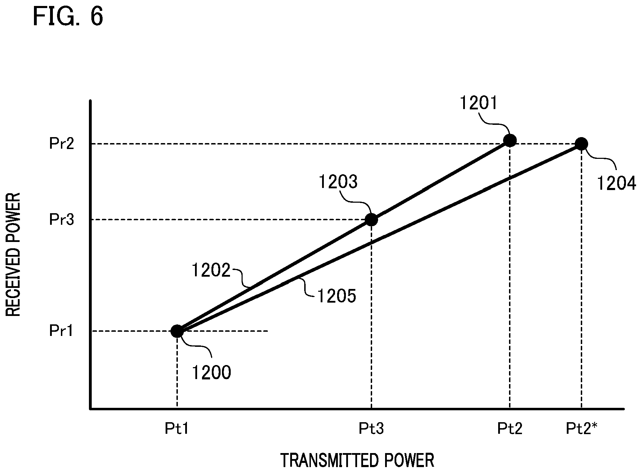

Subsequently, the second detection method will be described with reference to FIG. 6. FIG. 6 is a conceptual diagram illustrating the second detection method. In FIG. 6, the horizontal axis represents transmitted power of the power transmitting apparatus 100, and the vertical axis represents received power of the power receiving apparatus 101. On graph lines shown by linear line segments 1202 and 1205, a point 1200 corresponds to a first transmitted power value Pt1 and a first received power value Pr1. On the graph line shown by the line segment 1202, a point 1201 corresponds to a second transmitted power value Pt2 and a second received power value Pr2, and a point 1203 corresponds to a third transmitted power value Pt3 and a third received power value Pr3. On the graph line shown by the line segment 1205, a point 1204 corresponds to a transmitted power value Pt2* and the second received power value Pr2. The control of transmitted power by the power transmission unit 302 is performed by the power transmission control processing unit 406. A foreign object to be detected is a metal piece having conductivity or the like.

First, the power transmission unit 302 of the power transmitting apparatus 100 transmits a Digital Ping to the power receiving apparatus 101. The communication unit 304 of the power transmitting apparatus 100 receives information of a received power value in a light load state in the power receiving apparatus 101 by a Received Power Packet (mode 1). Hereinafter, the Received Power Packet (mode 1) is abbreviated as "RP1". Information of RP1 represents a received power value in a case where the power receiving apparatus 101 does not supply received power to a load (charging unit 205, battery 206, or the like).

The control unit 300 of the power transmitting apparatus 100 stores, in the memory 305, a Calibration Data Point representing a relationship between the received RP1 and the transmitted power value Pt1 when RP1 is obtained. Hereinafter, the Calibration Data Point is abbreviated as CDP. The CDP herein corresponds to the point 1200 of FIG. 6. The power transmitting apparatus 100 recognizes that, when power transmission at the transmitted power value Pt1 is performed, a power loss amount between the power transmitting apparatus 100 and the power receiving apparatus 101 is Pt1 -Pr1. Pt1 - Pr1 is denoted as Ploss1.

Next, the communication unit 304 of the power transmitting apparatus 100 receives the received power value Pr2 in a connected load state in the power receiving apparatus 101 by a Received Power Packet (mode 2) from the power receiving apparatus 101. Hereinafter, the Received Power Packet (mode 2) is abbreviated as "RP2". The received power value Pr2 is a received power value in a case where the power receiving apparatus 101 supplies received power to a load. Then, the control unit 300 of the power transmitting apparatus 100 stores, in the memory 305, a CDP representing a relationship between the received Pr2 and the transmitted power value Pt2 when Pr2 is obtained. The CDP herein corresponds to the point 1201 of FIG. 6. With this, the power transmitting apparatus 100 recognizes that, when power transmission at the transmitted power value Pt2 is performed, a power loss amount between the power transmitting apparatus 100 and the power receiving apparatus 101 is Pt2 - Pr2. Pt2 - Pr2 is denoted as Ploss2.

The calibration processing unit 402 of the power transmitting apparatus 100 performs linear interpolation between the point 1200 and the point 1201 that are two CDPs and generates a line segment 1202. The line segment 1202 represents a relationship between transmitted power and received power in a state in which a foreign object is not present around the power transmitting apparatus 100 and the power receiving apparatus 101. Accordingly, the power transmitting apparatus 100 can predict, from the transmitted power value and the line segment 1202, a received power value in a state in which the possibility of absence of a foreign object is high. For example, it is assumed that the transmitted power value is Pt3. The power transmitting apparatus 100 can predict the received power value Pr3 from the point 1203 on the line segment 1202 corresponding to the transmitted power value Pt3.

Here, it is assumed that the power transmission unit 302 of the power transmitting apparatus 100 performs power transmission to the power receiving apparatus 101 at the transmitted power value Pt3, and the communication unit 304 receives information of a received power value Pr3* from the power receiving apparatus 101. The second foreign object detection processing unit 404 of the power transmitting apparatus 100 subtracts the received power value Pr3* actually received from the power receiving apparatus 101 from the received power value Pr3 in a state in which the possibility of absence of a foreign object is high. That is, Pr3 - Pr3* (= Ploss _FO) is calculated. Ploss_FO corresponds to a power loss amount that, in a case where a foreign object is present between the power transmitting apparatus 100 and the power receiving apparatus 101, is consumed by a foreign object. If the power loss amount Ploss_FO that would have been consumed by the foreign object exceeds a predetermined threshold, the second foreign object detection processing unit 404 can determine that a foreign object is present. The threshold is derived based on, for example, a relationship between the point 1200 and the point 1201.

The second foreign object detection processing unit 404 of the power transmitting apparatus 100 preliminarily obtains a power loss amount Pt3 - Pr3 (= Ploss3) between the power transmitting apparatus 100 and the power receiving apparatus 101 from the received power value Pr3 in a state in which the possibility of absence of a foreign object is high. Then, in a state in which the presence or absence of a foreign object is unclear, processing of calculating a power loss amount Pt3 - Pr3* (= Ploss3*) between the power transmitting apparatus 100 and the power receiving apparatus 101 in a state in which a foreign object is present, from the received power value Pr3* received from the power receiving apparatus 101 is executed. The second foreign object detection processing unit 404 calculates Ploss3* - Ploss3. Ploss3* - Ploss3 = Pt3 - Pr3* - Pt3 + Pr3 = Pr3 - Pr3*, and this corresponds to Ploss_FO. If this value exceeds a predetermined threshold, the second foreign object detection processing unit 404 can determine that a foreign object is present (or the possibility of presence is high). In this way, the power loss amount Ploss_FO can be estimated by calculating the difference in power loss amount.

As above, as the calculation method of Ploss _FO, there are the method for calculating Ploss_FO from Pr3 - Pr3* and the method for calculating Ploss_FO from Ploss3* - Ploss3.

After the calibration processing unit 402 generates the line segment 1202 of FIG. 6, the second foreign object detection processing unit 404 regularly acquires information of a received power value (for example, Pr3*) from the power receiving apparatus 101 via the communication unit 304. Information of the received power value that is regularly transmitted from the power receiving apparatus 101 to the power transmitting apparatus 100 is transmitted to the power transmitting apparatus 100 by the Received Power Packet (mode 0). Hereinafter, the Received Power Packet (mode 0) is abbreviated as "RP0". The second foreign object detection processing unit 404 performs foreign object detection based on the received power value stored in RP0 and the line segment 1202.

In the present embodiment, the point 1200 and the point 1201 are used as the CDPs for generating the line segment 1202 of FIG. 6, and the line segment 1202 is acquired by linear interpolation. The line segment 1202 is not limited to this example, and is referred to as a "Calibration curve" including a case where a line segment is a curve. The CDPs and the Calibration curve are used as a reference (second reference) for second foreign object detection processing.

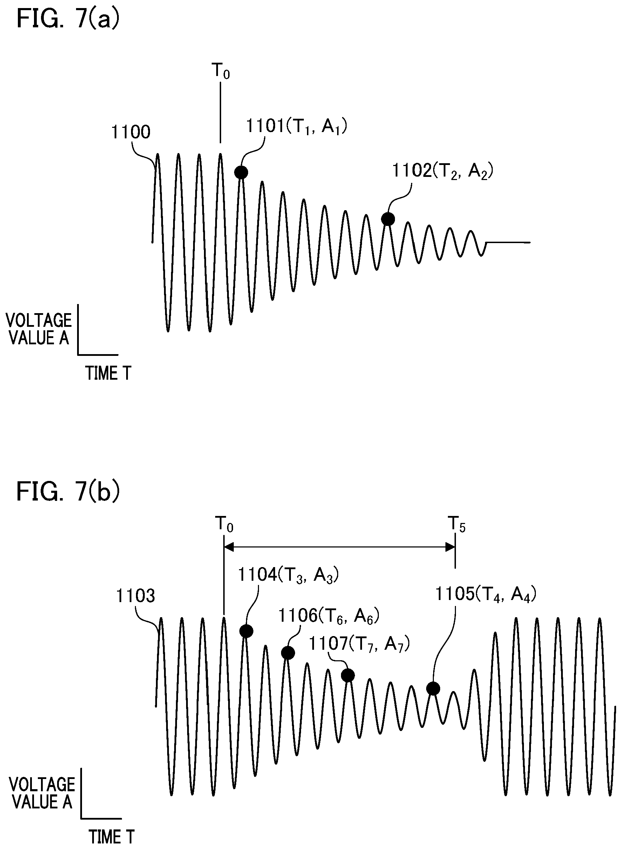

Next, a second Q factor measurement method will be described with reference FIG. 7. FIGS. 7(A) and 7(B) are conceptual diagrams illustrating the second Q factor measurement method. In the present embodiment, a foreign object detection based on the measured second Q factor (Q2) is referred to as a third foreign object detection method.

In the second Q factor measurement, the power transmitting apparatus 100 and the power receiving apparatus 101 perform control such that received power is not applied to a load, after turning on the switch units in the same period to instantaneously stop power transmission. With this, for example, a voltage that is applied to the power transmitting coil decreases exponentially. The second Q factor corresponding to a decay state of a power transmission waveform can be calculated. The power transmission waveform is a voltage waveform or a current waveform, and the second Q factor is calculated according to how a voltage value or a current value decreases.

FIG. 7(A) illustrates an example of a change over time of a waveform 1100. In FIG. 7(A), the horizontal axis is a time axis, and the vertical axis is a voltage axis. The waveform 1100 exhibits a change over time of a value (hereinafter, simply referred to as "voltage value of power transmitting coil") of a high-frequency voltage that is applied to a terminal portion of the power transmitting coil 303 or the resonance capacitor 306 of the power transmitting apparatus 100. The power transmitting apparatus 100 stops application (power transmission) of the high-frequency voltage at a time T0. A point 1101 is a point (in other words, a point of local maximum value) on an envelope of the high-frequency voltage. (T1,A1) at the point 1101 indicates that the voltage value is A1 at a time T1. A point 1102 is a point on the envelope of the high-frequency voltage. (T2,A2) at the point 1102 indicates that the voltage value is A2 at a time T2.

The second Q factor measurement is performed based on a change over time of the voltage value after the time T0. For example, the Q factor can be calculated based on a time, a voltage value, and a frequency (hereinafter, denoted as f and referred to as an operating frequency) of the high-frequency voltage at the point 1101 and the point 1102 illustrated in FIG. 7(A) by Expression 1.

$$Q = \pi \cdot f \cdot (T2 - T1) / \ln(A1 / A2) \text{ (Expression 1)}$$

In Expression 1, ln represents a natural logarithmic function. The second Q factor presents an electrical characteristic determined by a relationship between an elapsed time after power transmission is restricted and an amount of voltage drop of the power transmitting coil 303. In the present disclosure, it is assumed that the restriction of power transmission includes stopping of power transmission.

Next, measurement processing of the second Q factor will be described with reference to FIG. 7(B). In FIG. 7(B), the settings of the horizontal axis and the vertical axis are the same as those in FIG. 7(A). A waveform 1103 indicates a value of a high-frequency voltage that is applied to the power transmitting coil 303, and a frequency thereof is a frequency between 110 kHz and 148.5 kHz for use in the Qi standard. All of a point 1104, a point 1105, a point 1106, and a point 1107 are a point on an envelope of the high-frequency voltage, and correspond to (T3,A3), (T4,A4), (T6,A6), and (T7,A7), respectively. There are relationships "T3 < T6 < T7 < T4" and "A3 > A6 > A7 > A4".

In the example of FIG. 7(B), the power transmission unit 302 of the power transmitting apparatus 100 stops power transmission in a period of a time T0 to a time T5. The second Q factor measurement unit 401 calculates the second Q factor from, for example, a voltage value A3 (point 1104) at the time T3, a voltage A4 (point 1105) at the time T4, and the operating frequency f of the high-frequency voltage using Expression 1 described above. Thereafter, the power transmission unit 302 restarts power transmission at the time T5. In this way, the second Q factor measurement is performed based on an elapsed time from a point of time at which the power transmitting apparatus 100 instantaneously stops power transmission, the voltage value of the waveform, and the operating frequency. Also in the power receiving apparatus 101, in a similar manner, the second Q factor can be calculated as an electrical characteristic determined by a relationship between an elapsed time and an amount of voltage drop of the power receiving coil 201 after power transmission is restricted.

In the examples of FIGS. 7(A) and 7(B), while the vertical axis indicates the voltage value, the vertical value may be a current value flowing in the power transmitting coil. Similarly to a case where the voltage value is utilized, it is possible to calculate the second Q factor according to a decay state of the current value in a period during which power transmission is restricted.

An operation example in a case where the power transmitting apparatus 100 and the power receiving apparatus 101 execute the first foreign object detection processing, the second foreign object detection processing, and the third foreign object detection processing will be described partially with reference to of FIG. 8. In FIG. 8, the operation of the power transmitting apparatus 100 is illustrated on a left side, and the operation of the power receiving apparatus 101 is illustrated on a right side. F600 to F632 in the drawing are symbols and numerals for distinguishing the operation in each stage.

In F600, the power transmitting apparatus 100 transmits an Analog Ping to detect an object that is present near the power transmitting coil 303. The Analog Ping is pulsed power for detecting an object. The Analog Ping is very small power to such an extent that, even if the power receiving apparatus 101 receives the Analog Ping, the control unit 200 is unable to be started.

The power transmitting apparatus 100 executes detection processing of an object b y the Analog Ping. The detection processing is executed based on a shift of a resonant frequency of a voltage inside the power transmitting coil 303 or change in voltage value or current value of the power transmitting coil 303 due to an object present near the power transmitting coil 303.

If an object is detected by the Analog Ping, the power transmitting apparatus 100 measures the Q factor (Q1) of the power transmitting coil 303 by the first Q factor measurement in F601. Then, in F602, the power transmitting apparatus 100 starts transmission of a Digital Ping. The Digital Ping is power for starting the control unit 200 of the power receiving apparatus 101, and is power greater than the Analog Ping. The Digital Ping is continuously transmitted thereafter. That is, the power transmitting apparatus 100 continues to transmit power equal or greater than the Digital Ping in a period from a point of time at which the transmission of the Digital Ping starts to a point of time (see F622) at which End Power Transfer (EPT) described below is received.

The power receiving apparatus 101 receives the Digital Ping and starts. In F603, the power receiving apparatus 101 stores a voltage value of the received Digital Ping in a Signal Strength packet and transmits the Signal Strength packet to the power transmitting apparatus 100. Subsequently, in F604, the power receiving apparatus 101 transmits an ID packet in which an ID including version information of the WPC standard, to which the power receiving apparatus 101 conforms, or device identification information is stored, to the power transmitting apparatus 100. In addition, in F605, the power receiving apparatus 101 transmits a Configuration packet including information such as a maximum value of power that is supplied to a load (charging unit 205) by the voltage control unit 203, to the power transmitting apparatus 100.

The power transmitting apparatus 100 receives the ID packet and the Configuration packet. The power transmitting apparatus 100 determines that the power receiving apparatus 101 is compatible with an expansion protocol of the WPC standard v1.2 or later (including Negotiation described below) by these packets. In this case, in F606, the power transmitting apparatus 100 responds to the power receiving apparatus 101 with ACK that is an acknowledgement. If the power receiving apparatus 101 receives the ACK, transition is made to a Negotiation phase where a negotiation or the like on power to be transmitted and received is made.

In F607, the power receiving apparatus 101 transmits the FOD Status packet to the power transmitting apparatus 100. In the present embodiment, the FOD Status packet is denoted as "FOD (Q1)". The power transmitting apparatus 100 performs foreign object detection based on the Q factor (first characteristic value) stored in the received FOD (Q1) and the first Q factor by the first foreign object detection method. In F608, if determination is made that the possibility of absence of a foreign object is high, the power transmitting apparatus 100 transmits an ACK indicating a determination result to the power receiving apparatus 101.

If the power receiving apparatus 101 receives the ACK, the power receiving apparatus 101 performs a negotiation on Guaranteed Power (hereinafter, abbreviated to as GP) that is a maximum value of requested power to be received. The GP indicates load power of the power receiving apparatus 101 on which agreement is made between the power receiving apparatus 101 and the power transmitting apparatus 100. The load power corresponds to power that is consumed by the battery 206 or the like. The negotiation is implemented by the power receiving apparatus 101 transmitting a packet storing the value of the requested GP among Specific Requests defined by the WPC standard to the power transmitting apparatus 100. In the present embodiment, this packet is referred to as "SRQ (GP)". In F609, the power receiving apparatus 101 transmits the SRQ (GP) to the power transmitting apparatus 100.

The power transmitting apparatus 100 responds to the SRQ (GP) from the power receiving apparatus 101 based on power transmission capability or the like of the power transmitting apparatus 100. In F610, if determination is made that a GP value can be accepted, the power transmitting apparatus 100 transmits an ACK indicating that the request is accepted, to the power receiving apparatus 101. In the present embodiment, it is assumed that the power receiving apparatus 101 requests 15 (watt) as the GP value by the SRQ (GP).

If a negotiation on a plurality of parameters including the GP ends, in F611, the power receiving apparatus 101 requests the end of the negotiation (End Negotiation). A Specific Request of End Negotiation is denoted as "SRQ (EN)". After the power receiving apparatus 101 transmits the SRQ (EN) to the power transmitting apparatus 100, in F612, the power transmitting apparatus 100 transmits an ACK to the SRQ (EN). If the Negotiation ends, transition is made to a Power Transfer phase where power transmission/reception determined by the GP is performed.

Subsequently, the power transmitting apparatus 100 generates the Calibration curve for executing the second foreign object detection method based on the Power Loss method. In F613, the power transmitting apparatus 100 receives the RP1 from the power receiving apparatus 101. The RP1 includes an information element indicating that the power receiving apparatus 101 requests the power transmitting apparatus 100 to perform the second Q factor measurement. For example, a one-bit field indicating whether or not to request the second Q factor measurement is provided in a reserved region of the Received Power Packet. The power receiving apparatus 101 stores "1" in the field for requesting the second Q factor measurement, and stores "0" in the field for not requesting the second Q factor measurement. In the present embodiment, the bit of the field is referred to as a "request bit". The RP1 with the request bit of "1" is denoted as RP1 (FOD).

If the RP1 (FOD) is received from the power receiving apparatus 101, in F614, the power transmitting apparatus 100 performs the second Q factor measurement. The third foreign object detection processing is executed based on the Q2 that is a measurement result. Here, a response to the RP1 (FOD) is determined based on two elements. A first element is a result of the third foreign object detection processing. A second element is a Control Error Packet (hereinafter, abbreviated as CE) with which the power receiving apparatus 101 requests the power transmitting apparatus 100 to increase or decrease a power reception voltage (a power reception current or received power). The CE stores a Control Error Value. The Control Error Value is a measure indicating a difference between an actual operation point of the power receiving apparatus and a target operation point, and is represented by an eight-bit signed integer. Here, the operation point indicates a combination of a frequency of a voltage applied to a power transmission unit, a duty cycle, and an amplitude. If the Control Error Value is positive, this indicates that the actual operation point falls below the target operation point, and indicates that the power receiving apparatus 101 requests the power transmitting apparatus 100 to increase the strength of the power signal. Specifically, the power receiving apparatus 101 requests the power transmitting apparatus 100 to increase a power transmission voltage or a power transmission current. Conversely, if the Control Error Value is negative, this indicates that the actual operation point exceeds the target operation point, and indicates that the power receiving apparatus 101 requests the power transmitting apparatus 100 to decrease the strength of the power signal. Specifically, the power receiving apparatus 101 requests the power transmitting apparatus 100 to decrease a power transmission voltage or a power transmission current. If the Control Error Value is 0, this indicates that the power receiving apparatus 101 requests the power transmitting apparatus 100 to maintain a current operation point.

The power transmitting apparatus 100 quickly performs power transmission control based on the sign and the integer stored in the CE. Specifically, if an integer with + sign is stored in the CE, the power transmitting apparatus 100 performs control of quickly increasing the power transmission voltage. If an integer with - sign is stored in the CE, the power transmitting apparatus 100 performs control of quickly decreasing the power transmission voltage. If "0" is stored in the CE, the power transmitting apparatus 100 maintains a current power transmission voltage.

In F615, the power transmitting apparatus 100 determines that the received power value stored in the RP1 (FOD) and the transmitted power value of the power transmitting apparatus 100 when the received power is obtained are accepted as data of the CDP (corresponding to the point 1200 of FIG. 6). The power transmitting apparatus 100 transmits an acknowledgement ACK to the power receiving apparatus 101. Subsequently, in F616, the power receiving apparatus 101 transmits CE(+) indicating an increase in power to the power transmitting apparatus 100. The CE(+) represents a CE in which an integer with + sign is stored.

If the CE(+) is received, the power transmitting apparatus 100 changes a set value of the power transmission unit 302 to increase transmitted power. If received power increases in response to the CE(+), the power receiving apparatus 101 supplies the received power to the load (charging unit 205 or the battery 206). Subsequently, in F617, the power receiving apparatus 101 transmits RP2 (FOD) in which "1" is stored in the request bit, to the power transmitting apparatus 100. If the RP2 (FOD) is received from the power receiving apparatus 101, in F618, the power transmitting apparatus 100 performs the second Q factor measurement. The third foreign object detection processing is executed based on the measurement result of the second Q factor. Then, the power transmitting apparatus 100 determines that the received power value stored in the RP2 (FOD) and the transmitted power value of the power transmitting apparatus 100 when the received power is obtained are accepted as data of the CDP (corresponding to the point 1201 in FIG. 7). In F619, the power transmitting apparatus 100 transmits an acknowledgement ACK to the power receiving apparatus 101.

In F620, the power receiving apparatus 101 transmits the RP0 to the power transmitting apparatus 100. If the RP0 is received, the power transmitting apparatus 100 performs foreign object detection based on the second foreign object detection. As a result of the foreign object detection, if determination is made that the possibility of absence of a foreign object is high, in F621, the power transmitting apparatus 100 transmits an ACK to the power receiving apparatus 101. Thereafter, if the charging of the battery 206 ends, in F622, the power receiving apparatus 101 requests the power transmitting apparatus 100 to stop power transmission. In F622, the power receiving apparatus 101 transmits an End Power Transfer (EPT) that requests the power transmitting apparatus 100 to stop power transmission.

Next, the accuracy of a Q1 value and the first and third foreign object detection will be described with reference to FIG. 1(B). The Q1 value is the Q factor pertaining to the power transmitting coil of the TPT when the power receiving apparatus 101 is placed on the TPT. The Q factor changes according to a position of the center of the power receiving coil 201 of the power receiving apparatus 101 among the point 102 to the point 106. In general, as the overlap of the power transmitting coil and the power receiving coil is greater, the Q factor is greater. Since a relative positional relationship between the power transmitting coil and the power receiving coil when the power receiving apparatus 101 is placed on the power transmitting apparatus varies, a difference in positional relationship between both coils may be a factor of reducing the Q factor. The presence of a foreign object is also a factor of reducing the Q factor.

Here, a problem in a case where foreign object detection is performed based on the Q1 will be described with two cases as an example.

Case 1) It is assumed that the center of the power receiving coil 201 is on the point 102, and a foreign object is present near the power transmitting coil and the power receiving coil. If the power transmitting coil and the power receiving coil have the substantially same size, the overlap of the power transmitting coil and the power receiving coil is large compared to a case where the center point of the power receiving coil 201 is on another point (point 103 to point 106). Thus, the Q factor to be measured is high. Then, the Q factor is reduced due to the presence of the foreign object. In this case, since the foreign object is present, power transmission and reception should be restricted.

Case 2) It is assumed that the center of the power receiving coil 201 is on the point 103, and a foreign object is present near the power transmitting coil and the power receiving coil. If the power transmitting coil and the power receiving coil have the substantially same size, the low Q factor is observed compared to a case where the center of the power receiving coil 201 is on the point 102. Then, there is no reduction of the Q factor due to the presence of the foreign object. In this case, since the foreign object is not present, power transmission and reception should not be restricted.

However, a case where the Q factor measured in Case 2 is lower than the Q factor measured in Case 1 when foreign object detection is performed based on the average value Q1 of the Q factor is considered. In this case, in the power transmitting apparatus, detection omission (false negative) that determination is made that "a foreign object is absent" even though a foreign object is present may occur in Case 1. Erroneous detection (false positive) that determination is made that "a foreign object is present" even though a foreign object is absent may occur in Case 2. If foreign object detection is performed based only on the average value Q1, a foreign object detection result may be a factor of impairing the reliability of the system. In the present disclosure, a method that can execute detection with higher accuracy will be described.

The power receiving apparatus 101 of the present embodiment performs association with one or more physical quantities when the power receiving apparatus is placed on the power transmitting coil of the TPT and transmits the associated information to the power transmitting apparatus 100. The power transmitting apparatus 100 performs foreign object detection based on the associated information. One or more physical quantities are, for example, as described below.

· A position where the power receiving apparatus (power receiving coil) is placed on the power transmitting coil of the TPT, a Q factor of the power transmitting coil when the power receiving apparatus is placed, and a resonant frequency of the power transmitting coil when the power receiving apparatus is displaced (this is different from a resonant frequency of a single power transmitting coil).

· A coupling coefficient between the power transmitting coil and the power receiving coil, positions of the power receiving apparatus and the foreign object in a case where a foreign object is placed on the power transmitting coil of the TPT along with the power receiving apparatus, an alternating-current voltage value or an alternating current value and a frequency thereof (referred to as an operating frequency) or power transmitted power transmitted from the power transmitting coil.

· An alternating-current voltage value or an alternating current value and an operating frequency thereof or received power received by the power receiving coil, power consumption consumed by the foreign object with wireless power transmitted from the power transmitting coil at the operating frequency, and the like.

In the present disclosure, unless particularly described, it is assumed that the physical quantity indicates one or a plurality of physical quantities described above.

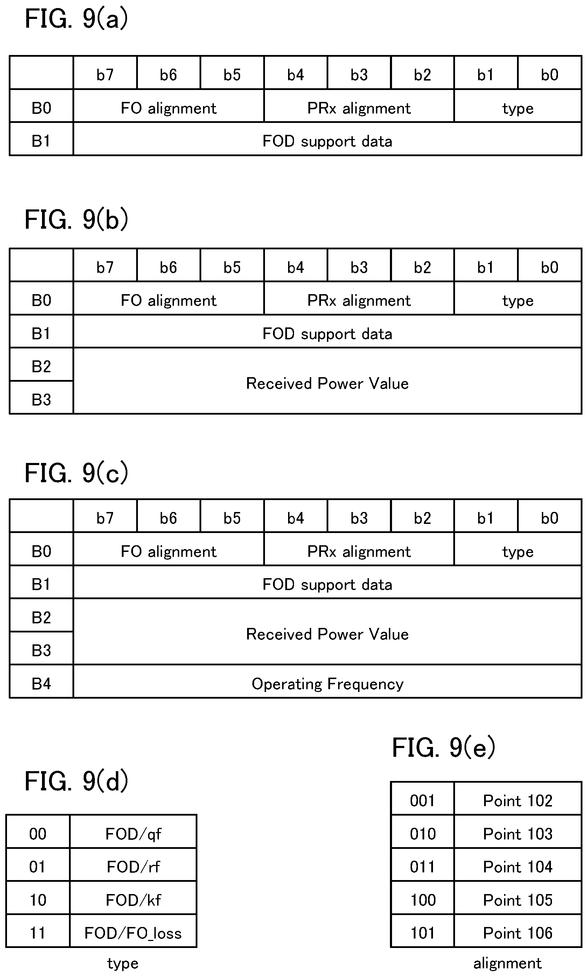

The FOD Status packet that is transmitted from the power receiving apparatus 101 will be described with reference to FIG. 9. FIG. 9 is an explanatory view of the FOD Status packet of the present embodiment. Respective data of Foreign object (FO) alignment, PRx alignment, and a type are stored in Bank 0, and FOD support data is stored in Bank 1. In the WPC standard of the related art, a region of bits 2 to 7 of Bank 0 is a reserved region, and "0" is stored therein. In the present embodiment, unlike the WPC standard of the related art, the PRx alignment is stored in a region of bits 2 to 4 of Bank 0. The PRx alignment indicates a positional relationship between the power transmitting coil and the power receiving coil (power receiving apparatus).

The PRx alignment will be described with reference to FIGS. 9(E) and 1(B). When the value of the PRx alignment is 001, this indicates that the center of the power receiving coil is substantially on the point 102. When the value of the PRx alignment is 010, this indicates that the center of the power receiving coil is substantially on the point 103. When the value of the PRx alignment is 011, this indicates that the center of the power receiving coil is substantially on the point 104. When the value of the PRx alignment is 100, this indicates that the center of the power receiving coil is substantially on the point 105. Then, when the value of the PRx alignment is 101, this indicates that the center of the power receiving coil is substantially on the point 106.

The FO alignment that is stored in a region of bits 5 to 7 of Bank 0 indicates a positional relationship between the foreign object and the power transmitting coil. In FIG. 9(E), when the value of the FO alignment is 001, this indicates that the center of the foreign object is substantially on the point 102. When the value of the FO alignment is 010, this indicates that the center of the foreign object is substantially on the point 103. When the value of the FO alignment is 011, this indicates that the center of the foreign object is substantially on the point 104. When the value of the FO alignment is 100, this indicates that the center of the foreign object is substantially on the point 105. Then, when the value of the FO alignment is 101, this indicates that the center of the foreign object is substantially on the point 106. When the value of the FO alignment is 000, this indicates that a foreign object is absent.

A region of bits 0 and 1 of Bank 0 is as in the related art and is a storage region of the type, and a value corresponding to the type is stored in Bank 1. Specific description will be provided with reference to FIG. 9(D). If the value of the type in the WPC standard of the related art is 00, this indicates that the FOD support data of Bank 1 is FOD/qf, that is, the Q factor (Q1 described above). If the value of the type is 01, this indicates that the FOD support data of Bank 1 is FOD/rf (resonant frequency), that is, the resonant frequency of the power transmitting coil of the TPT. If the value of the type is 10, this indicates that the FOD support data of Bank 1 is FOD/kf (k-factor), that is, the coupling coefficient between the power transmitting coil of the TPT and the power receiving coil. If the value of the type is 11, this indicates that the FOD support data of Bank 1 is data indicating power consumption consumed by the foreign object and changed to heat, and this is denoted as FOD/FO_loss.

In FIG. 9(B), Bank 2 and Bank 3 are provided with respect to FIG. 9(A). In Bank 2 and Bank 3, a received power value (Received Power Value) is stored. In FIG. 9(C), Bank 4 is further provided with respect to FIG. 9(B). In Bank 4, an operating frequency of a power transmission circuit of the power transmitting apparatus is stored. In addition, Bank 5, Bank 6, and the like may be added, and the alternating-current voltage value or an alternating current value and transmitted power transmitted from the power transmitting coil, the alternating-current voltage value or the alternating current value received by the power receiving coil, and values based on such values may be added.

The power receiving apparatus of the present embodiment can associate the physical quantities in each state corresponding to the presence or absence or the possibility of presence or absence of a foreign object with the regions corresponding to only the Q factor and the resonant frequency in the WPC standard of the related art and can transmit the associated physical quantities to the power transmitting apparatus. The physical quantity is one or more quantities of the Q factor, the resonant frequency, the coupling coefficient, the power consumption in the foreign object, and the like for use in state detection of wireless power transmission or the like. The control unit 200 of the power receiving apparatus 101 performs association with the physical quantity, and controls the communication unit 204 to transmit the associated information to the power transmitting apparatus 100. In addition, the control unit 200 performs association of information of the positional relationship between the power transmitting coil and the power receiving coil, information of the positional relationship between the power transmitting coil and the foreign object, the operating frequency, the received power value, and the like in each state. The power transmitting apparatus 100 that receives such information can detect the present or absence, the present probability, or the like of a foreign object based on a current Q factor, a resonant frequency, and a coupling coefficient with higher accuracy.

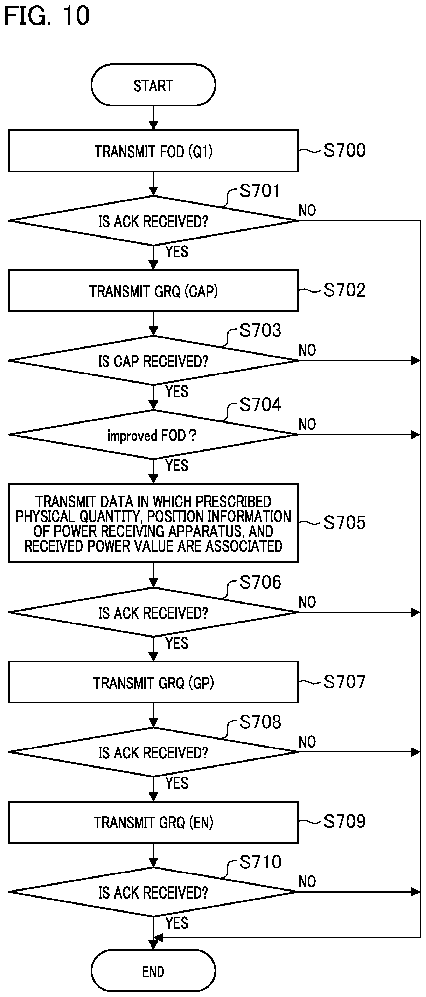

The operation of the power receiving apparatus 101 will be described with reference to FIG. 10. FIG. 10 is a flowchart illustrating the operation of the power receiving apparatus 101. The following process is implemented by the processor of the control unit 200 executing the control program. In S700, the power receiving apparatus 101 transmits the FOD (Q1) to the power transmitting apparatus (see F607 of FIG. 8). In S701, the control unit 200 determines whether or not the ACK is received from the power transmitting apparatus. If the ACK is received (in S701, Yes), the process proceeds to processing of S702, and if the ACK is not received (in S701, No), the process ends.

In S702, the power receiving apparatus 101 transmits the GRQ (CAP) to the power transmitting apparatus (see F623 of FIG. 8), and requests Capability (capability information). The GRQ is an abbreviation of "General Request packet". In S703, the control unit 200 determines whether or not a Capability packet (see F624 of FIG. 8) is received from the power transmitting apparatus 100. If the Capability packet is received (in S703, Yes), the process proceeds to processing of S704, and if the Capability packet is not received (in S703, No), the process ends.

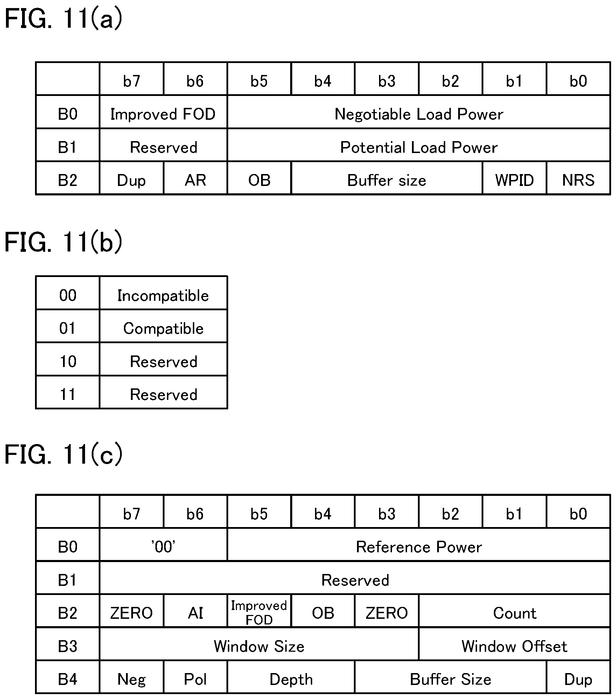

The Capability packet of the power transmitting apparatus in the present embodiment will be described with reference to FIG. 11. In FIG. 11(A), data of Improved FOD is stored in Bank 0. Data of bits 6 and 7 pertaining to the Improved FOD indicates whether or not to correspond to "improved foreign object detection" of the present embodiment. FIG. 11(B) is a diagram illustrating a two-bit value of the Improved FOD. In regard to the Improved FOD provided in Bank 0, if the value of the bits 6 and 7 is 00, this indicates Incompatible, that is, incompatible with the Improved FOD. If the value of the bits 6 and 7 is 01, this indicates Compatible, that is, compatible with the Improved FOD.

In S704 of FIG. 10, the power receiving apparatus 101 determines whether or not the power transmitting apparatus is compatible with the foreign object detection method (Improved FOD) of the present embodiment. If determines is made that the power transmitting apparatus is compatible with the Improved FOD (in S704, Yes), the process proceeds to S705, and if determination is made that the power transmitting apparatus is incompatible with the Improved FOD (in S704, No), the process ends.

In S705, the power receiving apparatus 101 transmits data in which the above-described prescribed physical quantities are associated with positional information of the power receiving apparatus with respect to the power transmitting apparatus and the received power value, to the power transmitting apparatus. Specifically, data in which information of the positional relationship between the power transmitting coil and the power receiving coil, information indicating the presence or absence or the position of the foreign object, the operating frequency, and the received power value with the Q factor, the resonant frequency, the coupling coefficient, and the power consumption in the foreign object is transmitted to the power transmitting apparatus. A communication example is illustrated in F625 to F632 of FIG. 8.

In S706, the power receiving apparatus 101 determines whether or not the ACK is received. The ACK is a response from the power transmitting apparatus 100 indicating that the possibility of absence of a foreign object is high, as a result of foreign object detection based on data associated in S705. If the ACK is received (in S706, Yes), the process proceeds to processing of S707, and if the ACK is not received (in S706, No), the process ends.

In S707, the power receiving apparatus 101 transmits the GRQ (GP) to the power transmitting apparatus to make a negotiation on the transmitted power (GP). Next, in S708, the power receiving apparatus 101 determines whether or not ACK is received from the power transmitting apparatus. If the ACK is received (in S708, Yes), the process proceeds to processing of S709, and if the ACK is not received (in S708, No), the process ends.

In S709, the power receiving apparatus 101 transmits the GRQ (EN) for ending the negotiation to the power transmitting apparatus. Next, in S710, the power receiving apparatus 101 determines whether or not ACK is received from the power transmitting apparatus. If the ACK is received (in S710, Yes), the negotiation phase ends at a point of time at which the ACK is received. If the ACK is not received (in S710, No), a series of processing ends.

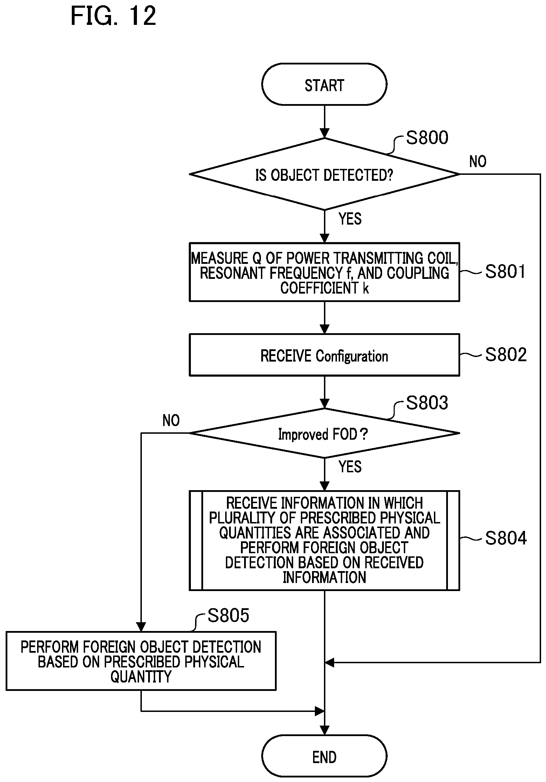

The operation of the power transmitting apparatus 100 will be described with reference to FIG. 12. FIG. 12 is a flowchart illustrating the operation of the power transmitting apparatus 100. The following process is implemented by the processor of the control unit 300 executing the control program.

In S800, the power transmitting apparatus 100 executes detection processing of an object by the Analog Ping. The control unit 300 determines whether or not an object is detected. If determination is made that an object is detected (in S800, Yes), the process proceeds to processing of S801, and if determination is made that an object is not detected (in S800, No), the process ends.

In S801, the power transmitting apparatus 100 measures the Q factor pertaining to the power transmitting coil, the resonant frequency, and the coupling coefficient k. In S802, the power transmitting apparatus 100 receives the Configuration packet from the power receiving apparatus.

FIG. 11(C) is an explanatory view of the Configuration packet of the present embodiment. An Improved FOD bit is provided in a bit 5 of a bank 2. If the power receiving apparatus is compatible with the Improved FOD, "1" is set in the Improved FOD bit. If the power receiving apparatus is incompatible with the Improved FOD, "0" is set in the Improved FOD bit.

In S803, the power transmitting apparatus 100 that receives the Configuration packet in S802 determines whether or not the power receiving apparatus is compatible with the Improved FOD. If determination is made that the power receiving apparatus is compatible with the Improved FOD (in S803, Yes), the process proceeds to processing of S804. If determination is made that the power receiving apparatus is incompatible with the Improved FOD (in S803, No), the process proceeds to processing of S805.

In S804, the power transmitting apparatus 100 receives information in which a plurality of prescribed physical quantities are associated, from the power receiving apparatus 101 and executes the first foreign object detection processing, the second foreign object detection, or the third foreign object detection processing based on the received information. In S805, the power transmitting apparatus 100 performs foreign object detection based on the prescribed physical quantities. For example, as in the related art, the foreign object detection processing based on the Q factor and the resonant frequency is executed. The power transmitting apparatus measures not only the Q factor but also one or more of the resonant frequency and the coupling coefficient in the second Q factor measurement that is performed based on reception of RPx (FOD) (here, x is 0, 1, and 2). It is possible to compare each of the measured Q factor, the resonant frequency, and the coupling coefficient with the threshold to perform foreign object detection.

After S804 or S805, a series of processing ends. The power transmitting apparatus 100 takes a necessary measure based on a foreign object detection result. The necessary measure is restriction of power transmission, changing of the transmitted power value or the frequency, and processing of requesting the power receiving apparatus to execute notification processing of prompting to remove a foreign object.

In the wireless power transmission system of the present embodiment, the power receiving apparatus associates information such as the positional relationship between the power transmitting coil and the power receiving coil, the presence or absence of the foreign object or the position of the foreign object, the operating frequency, and the received power value, with the prescribed physical quantities (Q factor, resonant frequency, coupling coefficient, and power consumption in the foreign object).

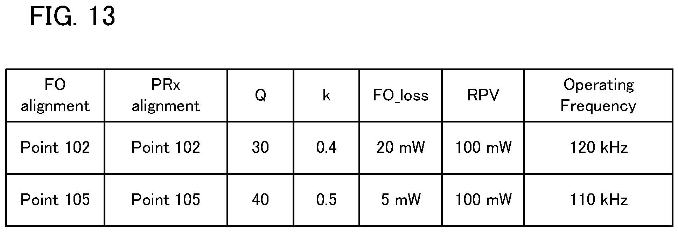

FIG. 13 illustrates an example where FO alignment, PRx alignment, a Q factor, a k value, FO _loss, a received power value (RPV), and an operating frequency are associated. Here, the FO alignment is information indicating the position of the foreign object on the power transmitting coil. The PRx Alignment is information indicating the position of the power receiving coil (power receiving apparatus). The k value is information indicating a coupling coefficient. FO_loss is information indicating power loss by a foreign object. The operating frequency is information indicating a frequency (Operating Frequency) of transmitted power. The power receiving apparatus transmits such information to the power transmitting apparatus by one or a plurality of packets. Then, the power transmitting apparatus stores associated information and executes the foreign object detection processing according to information, so that it is possible to improve detection accuracy.

[Modification Embodiment 1]

The power transmitting apparatus can correct the Calibration curve based on one or more of the measured Q factor (FOD/qf), K (FOD/kf), and the resonant frequency (FOD/rf). Specifically, after the Calibration curve is created, the power receiving apparatus requests the power transmitting apparatus to perform measurement using a request bit of RPx (FOD) (here, x is 0, 1, and 2) to be regularly transmitted. This measurement is measurement of one or more of the Q factor (FOD/qf), K (FOD/kf), and the resonant frequency (FOD/rf). Then, the power transmitting apparatus compares a measurement result obtained by measurement from the transmission of the Analog Ping until the transmission of the Digital Ping with a measurement result obtained by measurement based on the reception of the RPx (FOD). That is, one or more of the Q factor (FOD/qf), K (FOD/kf), and the resonant frequency (FOD/rf) acquired in each measurement are compared. The power transmitting apparatus moves the Calibration curve up and down based on a difference as a comparison result. For example, it is assumed that one or more of the Q factor (FOD/qf), K (FOD/kf), and the resonant frequency (FOD/rf) are greater than those in creating the Calibration curve. The power transmitting apparatus moves up (or down) the Calibration curve made of the line segment 1202 and the line segment 1205 of FIG. 6 by a prescribed amount. In addition, it is assumed that one or more of the Q factor (FOD/qf), K (FOD/kf), and the resonant frequency (FOD/rf) are smaller than those in creating the Calibration curve. The power transmitting apparatus moves down (or up) the Calibration curve made of the line segment 1202 and the line segment 1205 of FIG. 6 by a prescribed amount. This movement corresponds to processing of moving the Calibration curve in a received power direction (vertical axis direction) in FIG. 6. The power transmitting apparatus determines whether or not one or more of the Q factor (FOD/qf), K (FOD/kf), and the resonant frequency (FOD/rf) are different from the values of those stored in creating the Calibration curve. The movement of the Calibration curve to be performed in a case where the values are different is synonymous to correcting the received power value received with the RPx (FOD) by the power transmitting apparatus by a prescribed amount.

In this way, the power transmitting apparatus suitably corrects the created Calibration curve based on one or more of the Q factor (FOD/qf), K (FOD/kf), and the resonant frequency (FOD/rf) measured upon the reception of the PRx (FOD). With the correction of the Calibration curve, it is possible to improve the accuracy of foreign object detection. In the above description, although the method for correcting the created Calibration curve has been described, this method may be used in newly creating a Calibration curve.

The power transmitting apparatus corrects the measured physical quantities based on a temperature inside the power transmitting apparatus in receiving a request to measure one or more of the Q factor (FOD/qf), K (FOD/kf), and the resonant frequency (FOD/rf) from the power receiving apparatus and measuring the physical quantities. In such a manner, when the physical quantity changes depending on the temperature, it is possible to perform foreign object detection with higher accuracy.

[Modification Embodiment 2]

The power receiving apparatus stores a position on a plane of the power receiving coil (power receiving apparatus) on the power transmitting coil using PRx alignment or Foreign Object (FO) alignment in the FOD Status packet. In addition, a position of the power receiving coil (power receiving apparatus) on the power transmitting coil in a height direction may be added. In such a manner, it is possible to further increase the accuracy of foreign object detection.

[Modification Embodiment 3]

The power receiving apparatus of the above-described embodiment associates and transmits FO_loss with other physical quantities to the power transmitting apparatus using the FOD Status Packet. In addition, a power receiving apparatus of a modification embodiment stores physical quantities when a temperature of a foreign object or FO_loss reaches a threshold in a state in which the power receiving apparatus and the foreign object are placed on the power transmitting coil of the TPT, in the FOD Status Packet, and transmits the FOD Status Packet. For example, the threshold of the temperature of the foreign object is 85°C, and the threshold of FO_loss is 500 milliwatts.

Specific description will be provided. First, in a state in which the center of the power receiving coil is placed on the point 103 of FIG. 1(B), the TPT and the power receiving apparatus starts charging processing. At this point of time, a foreign object is not yet placed on the TPT. Then, the power receiving apparatus stores the physical quantities measured in this state in a non-volatile memory. Next, a foreign object is placed on the outer periphery of the power transmitting coil 1001, and the foreign object is moved toward the point 102 that is the center of the power transmitting coil 1001, while measuring the temperature (in particular, a highest temperature when the temperature is brought into a steady state) of the foreign object and FO_loss. The power receiving apparatus stores the physical quantities measured at a place where the temperature of the foreign object or FO_loss reaches the threshold, in the non-volatile memory. Then, the power receiving apparatus stores the physical quantities in a state in which the foreign object is not placed on the TPT and the physical quantities at a place where the temperature of the foreign object or FO_loss reaches the threshold in a state in which the foreign object is placed on the TPT, in the FOD Status Packets, respectively, and transmits the FOD Status Packets to the power transmitting apparatus. The power transmitting apparatus that receives the FOD Status Packets has a configuration to be able to correct a threshold for determination in addition to the configuration described above. A threshold for determining the possibility of presence of a foreign object in the third foreign object detection processing based on the second Q factor measurement is corrected using the FOD Status Packet including the physical quantities when the foreign object is placed on the TPT and the temperature of the foreign object or FO_loss reaches the threshold. Specifically, it is possible to correct thresholds of the Q factor, the resonant frequency, and the coupling coefficient in the third foreign object detection processing.

In the above description, the time when the power receiving apparatus is placed on the point 103 has been described. The power receiving apparatus may store the physical quantities in a state where a foreign object is absent to correspond to the physical quantities measured at a place where the temperature of the foreign object or FO_loss reaches the threshold as being placed on a plurality of different points on the TPT in the FOD Status Packet and may transmit the FOD Status Packet to the power transmitting apparatus. In such a manner, the power transmitting apparatus can estimate a position of the power receiving apparatus when the Q factor (F625 of FIG. 8), the resonant frequency f (F627 of FIG. 8), and the coupling coefficient k (F629 of FIG. 8) are received. It is possible to perform foreign object detection with higher accuracy by correcting the threshold of the third foreign object detection processing based on the corresponding physical quantities at the estimated position of the power receiving apparatus measured at the place where the temperature of the foreign object or FO_loss reaches the threshold.

[Modification Embodiment 4]

In the present modification embodiment, in addition to the configuration described above, the power receiving apparatus has a configuration to be able to correct the threshold in the third foreign object detection processing based on the operating frequency. The power receiving apparatus first performs charging at the operating frequency of, for example, 100 kHz, 125 kHz, and 148 kHz in a state in which the center of the power receiving coil is placed on the point 103 of FIG. 1(B), and stores the physical quantities measured at each operating frequency in the non-volatile memory. Then, the power receiving apparatus stores the physical quantities measured at different operating frequencies in the FOD Status Packet and transmits the FOD Status Packet to the power transmitting apparatus. The power transmitting apparatus can compare the operating frequency when the physical quantities stored in the FOD Status Packet are measured, with a current operating frequency, and can predict and correct the threshold at the current operating frequency.

[Other Modification Embodiments]

In a modification embodiment of the present disclosure, at least part of the processing illustrated in the flowcharts of FIGS. 10 and 12 is implemented by hardware. For example, a prescribed compiler is used to automatically generate a dedicated circuit on an FPGA from the program for implementing the respective steps. FPGA is an abbreviation of "Field Programmable Gate Array". In a similar manner to an FPGA, a Gate Array circuit may be formed and implemented as hardware.

In the present disclosure, although the Improved FOD having the meaning that "foreign object detection is improved" has been described, the present disclosure is not limited to such a name. For example, Enhanced FOD having a meaning of enhanced foreign object detection may be utilized.

The power transmitting apparatus and the power receiving apparatus may be an imaging apparatus (camera, video camera, or the like) or an image input device such as a scanner, or may be an image output device such as a printer, a copying machine, or a projector. In addition, the power transmitting apparatus and the power receiving apparatus may be a storage device such as a hard disc device or a memory device, or may be an information processing apparatus such as a personal computer (PC) or a smartphone.

The power receiving apparatus of the present disclosure may be information terminal equipment. For example, the information terminal equipment has a display unit (display) to which power received from a power receiving antenna is supplied and which displays information to a user. The power received from the power receiving antenna is stored in a power storage unit (battery), and the power is supplied from the battery to the display unit. In this case, the power receiving apparatus may have a communication unit that communicates with another apparatus different from the power transmitting apparatus. The communication unit may be compatible with a communication standard such as NFC communication or the fifth generation mobile communication system (5G).

The power receiving apparatus of the present disclosure may be a vehicle such as an automobile. For example, the automobile that is the power receiving apparatus may receive power from a charger (power transmitting apparatus) via a power transmitting antenna provided in a parking lot. The automobile that is the power receiving apparatus may receive power from a charger (power transmitting apparatus) via a power transmitting antenna embedded in a road. In such an automobile, the received power is supplied to a battery. The power of the battery may be supplied to a motor unit (motor or electric-powered unit) that drives wheels or may be used to drive a sensor for use in driving assistance or a communication unit that performs communication with an external apparatus. That is, in this case, the power receiving apparatus may have, in addition to the wheels, a battery, a motor or a sensor that is driven using received power, and further a communication unit that performs communication with an apparatus other than the power transmitting apparatus. In addition, the power receiving apparatus may have an accommodation unit that accommodates a person. An example of the sensor is a sensor for use in measuring an inter-vehicle distance or a distance from another obstacle. The communication unit may be compatible with, for example, the Global Positioning System (Global Positioning Satellite, GPS). In addition, the communication unit may be compatible with a communication standard such as the fifth generation mobile communication system. The vehicle may be a bicycle, a motorcycle, or the like.

The power receiving apparatus of the present disclosure may be a power tool, a household electrical appliance product, or the like. Each of such equipment that is the power receiving apparatus may have, in addition to a battery, a motor that is driven with received power stored in the battery. Such equipment may have notification means that notifies of a remaining amount of the battery. In addition, such equipment may have a communication unit that performs communication with another apparatus different from the power transmitting apparatus. The communication unit may be compatible with a communication standard such as NFC or the fifth generation mobile communication system (5G).

A power transmitting apparatus of the present disclosure may be an in-vehicle charger that performs power transmission to portable information terminal equipment such as a smartphone or a tablet corresponding to wireless power transmission inside a vehicle such as an automobile. Such an in-vehicle charger may be provided at any place in the automobile. For example, the in-vehicle charger may be provided in a console of the automobile or may be provided in an instrument panel (instrument panel or dashboard), a position between seats of passengers, a ceiling, or a door. Note that the in-vehicle charger may not be provided at a place interfering with driving. Although an example where the power transmitting apparatus is the in-vehicle charger has been described, such a charger is not limited as being provided in the vehicle, and may be provided in a transport such as a train, an aircraft, or a ship. Also in this case, the charger may be provided in a position between seats of passengers, a ceiling, or a door.

A vehicle such as an automobile including an in-vehicle charger may be a power transmitting apparatus. In this case, the power transmitting apparatus has wheels and a battery and supplies power to a power receiving apparatus using power of the battery by a power transmission circuit unit or a power transmitting antenna.

According to the present disclosure, it is possible to perform the state detection or the foreign object detection in the power transmitting apparatus and the power receiving apparatus conforming to the WPC standard with higher accuracy.

[Other Embodiments]

The present disclosure can also be implemented by processing in which a program that implements one or more functions of the above-described embodiment is supplied to a system or an apparatus via a network or a storage medium, and one or more processors in a computer of the system or the apparatus reach and execute the program. In addition, the present disclosure can also be implemented by a circuit (for example, an ASIC) that implements one or more functions.

(Cross-Reference to Related Applications)

The present application claims the benefit of priority based on Japanese Patent Application No. 2022-065780, filed on April 12, 2022. The present application claims the benefit of priority based on Japanese Patent Application No. 2022-081019, filed on May 17, 2022. The contents of the above Japanese patent applications are incorporated in the present specification by reference in their entireties.

**Claims**

1. A power receiving apparatus that receives power from a power transmitting apparatus by wireless power transmission, the power receiving apparatus comprising:

   communication means for communicating with the power transmitting apparatus; and
   control means for performing association with a physical quantity for use in detection of a state of the power receiving apparatus with respect to the power transmitting apparatus or detection of an object different from the power transmitting apparatus and the power receiving apparatus and perform control of transmitting associated information to the power transmitting apparatus by the communication means.

2. The power receiving apparatus according to claim 1,

wherein the physical quantity is one or more quantities of a Q factor relating to a power transmitting coil of the power transmitting apparatus, a resonant frequency, a coupling coefficient between the power transmitting coil and a power receiving coil of the power receiving apparatus, and power consumption in the object, and the control means associates information indicating a positional relationship between the power transmitting coil and the power receiving coil or the object with the physical quantity.

3. The power receiving apparatus according to claim 1 or 2,
wherein the control means performs association with the physical quantity in each state corresponding to presence or absence or a possibility of presence or absence of the object.

4. The power receiving apparatus according to any one of claims 1 to 3,
wherein the control means associates an operating frequency relating to power transmitted from the power transmitting apparatus or a received power value with the physical quantity.

5. The power receiving apparatus according to claim 2 or 3,
wherein the control means executes detection processing of the object using a measurement result of a Q factor based on a decay state of a power transmission waveform.

6. A power transmitting apparatus that transmits power to the power receiving apparatus according to claim 1, the power transmitting apparatus comprising:

communication means for communicating with the power receiving apparatus; and
control means for executing, in a case where the communication means receives information with which the physical quantity when the power receiving apparatus is placed on a predetermined power transmitting coil is associated, detection processing of the object based on the received information.

7. The power transmitting apparatus according to claim 6,
wherein the control means executes, as the detection processing of the object to be executed according to the received information, first detection processing based on a measurement result of a Q factor relating to the power transmitting coil or second detection processing based on a power loss amount in the wireless power transmission.

8. The power transmitting apparatus according to claim 7,
wherein the control means executes the first detection processing using a measurement result of a first Q factor that changes due to an influence of the object or a second Q factor based on a decay state of the power transmission waveform.

9. A method for controlling a power receiving apparatus that is executed in the power receiving apparatus configured to receive power from a power transmitting apparatus by wireless power transmission, the method comprising:

a step of communicating with the power transmitting apparatus by a communication means; and
a step of performing, by a control means, association with a physical quantity for use in detection of a state of a power receiving apparatus with respect to the power transmitting apparatus or detection of an object different from the power transmitting apparatus and the power receiving apparatus and performing control of transmitting associated information to the power transmitting apparatus by the communication means.

10. A method for controlling a power transmitting apparatus that is executed in the power transmitting apparatus configured to transmit power to the power receiving apparatus according to claim 1, the method comprising:

a step of communicating with the power receiving apparatus by a communication means; and
a step of executing, by a control means, in a case where the communication means receives information with which the physical quantity when the power receiving apparatus is placed on a predetermined power transmitting coil is associated, detection processing of the object based on the received information.

11. A program causing a computer to execute each step according to claim 9 or 10.

12. A storage medium storing a program causing a computer to execute each step according to claim 9 or 10.

# FIG. 1(a)

101 — POWER RECEIVING APPARATUS

100 — POWER TRANSMITTING APPARATUS

# FIG. 1(b)

FIG. 2

FIG. 3

FIG. 4

400
FIRST Q FACTOR
MEASUREMENT UNIT

401
SECOND Q FACTOR
MEASUREMENT UNIT

402
Calibration PROCESSING UNIT

403
FIRST FOREIGN OBJECT
DETECTION PROCESSING UNIT

404
SECOND FOREIGN OBJECT
DETECTION PROCESSING UNIT

405
THIRD FOREIGN OBJECT
DETECTION PROCESSING UNIT

406
POWER TRANSMISSION
CONTROL PROCESSING UNIT

FIG. 5

```
┌─────────────────────────────────────────────────────────────┐
│              ⌐501                        ⌐500                 │
│   ┌──────────────────────┐    ┌──────────────────────────┐   │
│   │   SECOND Q FACTOR     │    │   THIRD FOREIGN OBJECT    │   │
│   │   MEASUREMENT UNIT    │────│ DETECTION PROCESSING UNIT │   │
│   └──────────────────────┘    └──────────────────────────┘   │
└─────────────────────────────────────────────────────────────┘
```

# FIG. 6

FIG. 7(a)

FIG. 7(b)

## FIG. 8

| POWER TRANSMITTING APPARATUS | | POWER RECEIVING APPARATUS |
|---|---|---|

F600 — Analog Ping →

F601 — MEASURE FIRST Q FACTOR

F602 — Digital Ping →

F603 — Signal Strength ←

F604 — ID ←

F605 — Configuration ←

F606 — ACK →

F607 — FOD(Q1) ←

F608 — ACK →

F623 — GRQ(CAP) ←

F624 — CAP →

F625 — FOD(Q2) ←

F626 — ACK →

F627 — FOD(F) ←

F628 — ACK →

F629 — FOD(k) ←

F630 — ACK →

F631 — FOD(FO_LOSS) ←

F632 — ACK →

F609 — SRQ(GP) ←

F610 — ACK →

F611 — SRQ(EN) ←

F612 — ACK →

F613 — RP1(FOD) ←

F614 — MEASURE SECOND Q FACTOR

F615 — ACK →

F616 — CE(+) ←

F617 — RP2(FOD) ←

F618 — MEASURE SECOND Q FACTOR

F619 — ACK →

F620 — RP0 ←

F621 — ACK →

F622 — EPT ←

## FIG. 9(a)

|    | b7 | b6 | b5 | b4 | b3 | b2 | b1 | b0 |
|----|----|----|----|----|----|----|----|----|
| B0 | FO alignment | | | PRx alignment | | | type | |
| B1 | FOD support data | | | | | | | |

## FIG. 9(b)

|    | b7 | b6 | b5 | b4 | b3 | b2 | b1 | b0 |
|----|----|----|----|----|----|----|----|----|
| B0 | FO alignment | | | PRx alignment | | | type | |
| B1 | FOD support data | | | | | | | |
| B2 | Received Power Value | | | | | | | |
| B3 | | | | | | | | |

## FIG. 9(c)

|    | b7 | b6 | b5 | b4 | b3 | b2 | b1 | b0 |
|----|----|----|----|----|----|----|----|----|
| B0 | FO alignment | | | PRx alignment | | | type | |
| B1 | FOD support data | | | | | | | |
| B2 | Received Power Value | | | | | | | |
| B3 | | | | | | | | |
| B4 | Operating Frequency | | | | | | | |

## FIG. 9(e)

| 001 | Point 102 |
|-----|-----------|
| 010 | Point 103 |
| 011 | Point 104 |
| 100 | Point 105 |
| 101 | Point 106 |

alignment

## FIG. 9(d)

| 00 | FOD/qf |
|----|--------|
| 01 | FOD/rf |
| 10 | FOD/kf |
| 11 | FOD/FO_loss |

type

# FIG. 10

```
                    ┌──────────────┐
                    │    START     │
                    └──────┬───────┘
                           │
              ┌────────────▼────────────┐
              │    TRANSMIT FOD (Q1)     │───── S700
              └────────────┬────────────┘
                           │                        S701
                    ◇──────▼──────◇  NO
                    IS ACK RECEIVED? ──────────────────┐
                    ◇─────────────◇                    │
                           │ YES                        │
              ┌────────────▼────────────┐               │
              │   TRANSMIT GRQ (CAP)     │───── S702     │
              └────────────┬────────────┘               │
                           │                  S703       │
                    ◇──────▼──────◇  NO                  │
                    IS CAP RECEIVED? ──────────────────► │
                    ◇─────────────◇                      │
                           │ YES               S704      │
                    ◇──────▼──────◇  NO                  │
                    improved FOD?    ──────────────────► │
                    ◇─────────────◇                      │
                           │ YES                          │
    ┌──────────────────────▼──────────────────────┐      │
    │ TRANSMIT DATA IN WHICH PRESCRIBED            │      │
    │ PHYSICAL QUANTITY, POSITION INFORMATION      │───── S705
    │ OF POWER RECEIVING APPARATUS, AND            │      │
    │ RECEIVED POWER VALUE ARE ASSOCIATED          │      │
    └──────────────────────┬──────────────────────┘      │
                           │                  S706        │
                    ◇──────▼──────◇  NO                   │
                    IS ACK RECEIVED? ──────────────────► │
                    ◇─────────────◇                       │
                           │ YES                           │
              ┌────────────▼────────────┐                  │
              │   TRANSMIT GRQ (GP)      │───── S707        │
              └────────────┬────────────┘                  │
                           │                  S708          │
                    ◇──────▼──────◇  NO                     │
                    IS ACK RECEIVED? ──────────────────►   │
                    ◇─────────────◇                         │
                           │ YES                             │
              ┌────────────▼────────────┐                    │
              │   TRANSMIT GRQ (EN)      │───── S709          │
              └────────────┬────────────┘                    │
                           │                  S710            │
                    ◇──────▼──────◇  NO                       │
                    IS ACK RECEIVED? ──────────────────►     │
                    ◇─────────────◇                           │
                           │ YES                               │
                    ┌──────▼───────┐◄──────────────────────────┘
                    │     END      │
                    └──────────────┘
```

## FIG. 11(a)

|  | b7 | b6 | b5 | b4 | b3 | b2 | b1 | b0 |
|---|---|---|---|---|---|---|---|---|
| B0 | Improved FOD | | Negotiable Load Power | | | | | |
| B1 | Reserved | | Potential Load Power | | | | | |
| B2 | Dup | AR | OB | Buffer size | | | WPID | NRS |

## FIG. 11(b)

| 00 | Incompatible |
|---|---|
| 01 | Compatible |
| 10 | Reserved |
| 11 | Reserved |

## FIG. 11(c)

|  | b7 | b6 | b5 | b4 | b3 | b2 | b1 | b0 |
|---|---|---|---|---|---|---|---|---|
| B0 | '00' | | Reference Power | | | | | |
| B1 | Reserved | | | | | | | |
| B2 | ZERO | AI | Improved FOD | OB | ZERO | Count | | |
| B3 | Window Size | | | | Window Offset | | | |
| B4 | Neg | Pol | Depth | | Buffer Size | | | Dup |

FIG. 12

```
                    ┌──────────────┐
                    │    START     │
                    └──────┬───────┘
                           │
                           ▼              ⌐S800
              ╱─────────────────────────╲        NO
             ╱      IS OBJECT DETECTED?   ╲──────────────┐
             ╲                            ╱              │
              ╲─────────────┬────────────╱               │
                            │ YES                        │
                            ▼                            │
        ┌───────────────────────────────────┐  ⌐S801    │
        │ MEASURE Q OF POWER TRANSMITTING    │          │
        │ COIL, RESONANT FREQUENCY f, AND    │          │
        │ COUPLING COEFFICIENT k             │          │
        └──────────────────┬────────────────┘          │
                           │                            │
                           ▼                            │
        ┌───────────────────────────────────┐  ⌐S802    │
        │        RECEIVE Configuration       │          │
        └──────────────────┬────────────────┘          │
                           │                            │
                           ▼          ⌐S803              │
    NO      ╱─────────────────────────╲                 │
 ┌──────────      Improved FOD ?        ╲                │
 │          ╲                          ╱                 │
 │           ╲────────────┬───────────╱                  │
 │                        │ YES                          │
 │                        ▼                              │
 │      ┌───────────────────────────────────┐ ⌐S804     │
 │      │ RECEIVE INFORMATION IN WHICH       │           │
 │      │ PLURALITY OF PRESCRIBED PHYSICAL   │           │
 │      │ QUANTITIES ARE ASSOCIATED AND      │           │
 │      │ PERFORM FOREIGN OBJECT             │           │
 │      │ DETECTION BASED ON RECEIVED        │           │
 │      │ INFORMATION                        │           │
 │      └──────────────────┬────────────────┘           │
 │    ⌐S805                │                             │
 ▼                         │                             │
┌──────────────────────────┐                            │
│ PERFORM FOREIGN OBJECT    │                            │
│ DETECTION BASED ON        │                            │
│ PRESCRIBED PHYSICAL       │                            │
│ QUANTITY                  │                            │
└────────────┬─────────────┘                            │
             │                 ▼                         │
             └────────────────►├◄────────────────────────┘
                               ▼
                        ┌──────────────┐
                        │     END      │
                        └──────────────┘
```

FIG. 13

| FO alignment | PRx alignment | Q | k | FO_loss | RPV | Operating Frequency |
|---|---|---|---|---|---|---|
| Point 102 | Point 102 | 30 | 0.4 | 20 mW | 100 mW | 120 kHz |
| Point 105 | Point 105 | 40 | 0.5 | 5 mW | 100 mW | 110 kHz |

| | INTERNATIONAL SEARCH REPORT | International application No. |
|---|---|---|
| | | **PCT/JP2023/005324** |

**A.    CLASSIFICATION OF SUBJECT MATTER**

*H02J 50/10*(2016.01)i; *H02J 50/12*(2016.01)i; *H02J 50/60*(2016.01)i; *H02J 50/80*(2016.01)i; *H02J 50/90*(2016.01)i
FI:    H02J50/60; H02J50/80; H02J50/12; H02J50/10; H02J50/90

According to International Patent Classification (IPC) or to both national classification and IPC

**B.    FIELDS SEARCHED**

Minimum documentation searched (classification system followed by classification symbols)

H02J50/10; H02J50/12; H02J50/60; H02J50/80; H02J50/90

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-017379 A (SONY CORP) 24 January 2013 (2013-01-24) | 1-3, 6-7, 9-12 |
| | paragraphs [0010]-[0153], fig. 1-14 | |
| A | | 4-5, 8 |
| A | JP 2021-129457 A (CANON KK) 02 September 2021 (2021-09-02) | 1-12 |
| | paragraphs [0011]-[0076], fig. 1-5 | |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/005324**

| Patent document cited in search report | | | Publication date (day/month/year) | Patent family member(s) | | | Publication date (day/month/year) |
|---|---|---|---|---|---|---|---|
| JP | 2013-017379 | A | 24 January 2013 | US | 2014/0125287 | A1 | |
| | | | | paragraphs [0043]-[0208], fig. 1-14 | | | |
| | | | | EP | 3396807 | A1 | |
| | | | | CN | 103765728 | A | |
| | | | | KR | 10-2014-0036344 | A | |
| JP | 2021-129457 | A | 02 September 2021 | CN | 115104235 | A | |
| | | | | KR | 10-2022-0136399 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017070074 A
- JP 2017034972 A
- JP 2017022999 A
- JP 2022065780 A
- JP 2022081019 A